# DEMANDE DE BREVET EUROPEEN

(11) **EP 3 987 987 A1**
(43) Date de publication de la demande: **27.04.2022**
(21) Numéro de dépôt: 21214554.4
(22) Date de dépôt: 18.05.2021
(51) Int. Cl.: A47J 27/08, A47J 37/06, A47J 37/12

(54) **APPAREIL DE CUISSON ELECTRIQUE**

(30) Priorité: 19.05.2020 FR 2005026
(62) Demande divisionnaire de: 21174476.8
(71) Demandeur: SEB S.A., 69130 Ecully (FR)
(72) Inventeur: SEURAT, Frédéric, 21490 BRETIGNY (FR)
(74) Mandataire: SEB Développement

(57) **Abrégé**

Appareil de cuisson, comprenant :
- un boîtier (10),
- une cuve de cuisson (20),
- des premiers moyens de cuisson par convection (60), positionnés au-dessus de la cuve de cuisson (20),
- des deuxièmes moyens de cuisson (70), positionnés sous la cuve de cuisson (20),
caractérisé en ce que l'appareil de cuisson comprend un dispositif de régulation de pression (80) amovible au-dessus de la cuve de cuisson (20),
de façon à proposer :
- un premier mode de fonctionnement sous pression, dans lequel les premiers moyens de cuisson par convection (60) sont rendus inopérants, et les deuxièmes moyens de cuisson (70) sont rendus opérants,
- ou un deuxième mode de fonctionnement à pression atmosphérique, dans lequel les premiers moyens de cuisson par convection (60) et/ou les deuxièmes moyens de cuisson (70) sont rendus opérants.

## Description

### DOMAINE TECHNIQUE

La présente invention concerne un appareil de cuisson électrique.

### ART ANTÉRIEUR

Des appareils de cuisson électrique, du type friteuse à air chaud, permettent de cuire des aliments qui peuvent être d'origine végétale ou animale, par exemple des frites, des légumes, de la viande ou du poisson. Ils permettent de réduire fortement la quantité de matière grasse, voire de la supprimer complètement, ce qui permet de consommer des aliments plus diététiques, croustillants à l'extérieur et moelleux à l'intérieur. En effet, la cuisson s'effectue avec peu ou pas d'huile grâce à de l'air chaud circulant dans une chambre de cuisson. Étant donné la réduction ou la suppression de l'huile pour la cuisson, ces appareils dégagent moins d'odeurs et l'utilisateur ingère moins de graisses. Le nettoyage de tels appareils est en outre simplifié.

Un appareil de cuisson électrique, tel que celui décrit dans le document FR3002130A1 comprend de façon connue :
- un boîtier comportant une cuve de cuisson configurée pour recevoir des aliments à cuire,
- un couvercle, monté pivotant sur le boîtier entre une position ouverte dans laquelle le couvercle libère un accès à la cuve de cuisson et une position fermée dans laquelle le couvercle empêche l'accès à la cuve de cuisson, permet d'éviter les éclaboussures et forme une chambre de cuisson pour les aliments,
- un élément de chauffage qui est disposé dans le boîtier et qui est configuré pour chauffer la cuve de cuisson par convection, et qui est agencé pour générer une circulation d'air chaud sur les aliments à cuire reçus dans la cuve de cuisson.

Un deuxième élément de chauffage peut être ajouté, pour permettre de chauffer la paroi de la cuve et donc d'assurer une cuisson des aliments reçus dans la cuve de cuisson.

L'appareil de cuisson électrique peut également comprendre une pale qui avec sa rotation grâce à des moyens adéquats permet de brasser les aliments présents au fond de la cuve. Les aliments sont ainsi remués en continu et la pale permet de les cuire ou de les frire de manière homogène, ce qui est intéressant à titre d'exemple dans le cas de la cuisson des frites, fricassées de viandes, fruits de mer, légumes et fruits.

Toutefois, un tel appareil de cuisson électrique ne permet notamment pas d'assurer une cuisson de nombreux autres types d'aliments avec d'autres modes de cuisson. D'autres modes de cuisson sont recherchés à l'heure actuelle dans le cadre d'une alimentation plus saine.

### RESUME DE L'INVENTION

Le problème technique à la base de l'invention consiste notamment à fournir un appareil de cuisson électrique qui soit de structure simple, tout en permettant de préparer des aliments reçus dans une cuve de cuisson de l'appareil de cuisson électrique selon plusieurs modes de cuisson.

Dans ce but, la présente invention porte, dans un aspect principal, sur un appareil de cuisson électrique, comprenant :
- un boîtier,
- une cuve de cuisson, montée dans le boîtier et configurée pour recevoir des aliments à cuire,
- un couvercle extérieur, disposé sur le boitier et mobile entre une position ouverte pour donner accès à la cuve de cuisson et une position fermée pour empêcher l'accès à la cuve de cuisson et définir ainsi un espace de cuisson,
- des premiers moyens de cuisson par convection, positionnés par exemple en partie inférieure du couvercle extérieur, notamment au-dessus de la cuve de cuisson, et agencés pour générer un flux d'air chaud sur les aliments à cuire reçus dans la cuve de cuisson,
- des deuxièmes moyens de cuisson, positionnés en partie inférieure du boîtier, par exemple sous la cuve de cuisson,
   caractérisé en ce que l'appareil de cuisson comprend un dispositif de régulation de pression comprenant un couvercle intérieur amovible, apte à rendre étanche un espace interne de la cuve de cuisson, et au moins un élément de régulation de pression disposé sur le couvercle intérieur et agencé pour réguler une pression au sein de l'espace interne de la cuve de cuisson,
   de façon à proposer :
      - un premier mode de fonctionnement sous pression, dans lequel
         ▪ le couvercle intérieur est monté au niveau d'un rebord supérieur de la cuve de cuisson sous le couvercle extérieur et sous les premiers moyens de cuisson par convection,
         ▪ le couvercle extérieur est en position fermée,
         ▪ les premiers moyens de cuisson par convection sont rendus inopérants, et
         ▪ les deuxièmes moyens de cuisson sont rendus opérants,
      - ou un deuxième mode de fonctionnement à pression atmosphérique, dans lequel
         ▪ le couvercle intérieur est retiré de la cuve de cuisson,
         ▪ le couvercle extérieur est en position fermée, et
         ▪ les premiers moyens de cuisson par convection et/ou les deuxièmes moyens de cuisson sont rendus opérants.

Autrement dit, l'appareil permet à la fois de préparer et de cuire les aliments selon au moins deux modes de cuisson différents.

Selon un aspect de l'invention, l'appareil de cuisson électrique comprend en outre :
- une pale de brassage amovible, et configurée pour brasser des aliments à cuire reçus dans la cuve de cuisson,
- un dispositif d'entrainement en rotation, apte à entrainer en rotation la pale de brassage,

Dans un premier mode de fonctionnement sous pression, l'utilisateur installe le couvercle intérieur pour obtenir et maintenir de la pression au sein de la cuve. Avec les premiers moyens de cuisson par convection rendus inopérants et les deuxièmes moyens de cuisson opérants, l'appareil de cuisson permet chauffer la cuve de cuisson par le dessous et de cuire sous pression, ce qui permet de diminuer le temps de cuisson. L'appareil de cuisson permet de cuire sous pression à la vapeur, ce qui rend les aliments tendres, comme par exemple les légumes qui peuvent être ensuite moulinés pour faire de la soupe. L'appareil de cuisson permet de faire fermenter un yaourt avec présence de vapeur d'eau vapeur, le couvercle intérieur étant monté sur la cuve. L'appareil de cuisson permet de faire tremper des légumineuses à basse température constante, puis de les cuire ensuite sous pression.

Dans le deuxième mode de fonctionnement à pression atmosphérique, l'utilisateur n'utilise pas le couvercle intérieur. La cuisson peut ainsi se faire de différentes façons en variant les modes de chauffage. Selon l'activation ou non des premiers moyens de cuisson par convection et des deuxièmes moyens de cuisson, et avec ou sans la pale de brassage amovible, l'appareil de cuisson électrique permet différents types de cuisson. Avec les premiers moyens de cuisson par convection opérants et les deuxièmes moyens de cuisson rendus inopérants, l'appareil de cuisson permet de frire les aliments avec un peu d'huile au fond de la cuve, ou de les frire à l'air chaud, ou de les déshydrater, ou de les gratiner. Avec les premiers et les deuxièmes moyens de cuisson par convection opérants, l'appareil de cuisson permet de faire croustiller les aliments, ou de les rôtir, ou de les cuire de manière analogue à un four. Avec les premiers moyens de cuisson par convection rendus inopérants et les deuxièmes moyens de cuisson opérants, l'appareil de cuisson permet de faire sauter et rissoler les aliments, ou de les faire fondre, ou de les bouillir, ou de les cuire par cuisson lente. L'appareil de cuisson permet également de réchauffer, ou de décongeler, ou de maintenir des aliments au chaud.

Si nécessaire et selon les modes de préparation des recettes, les deux modes de fonctionnement permettent à l'utilisateur de remuer, ou de mélanger, ou de râper, ou de trancher, ou de malaxer, ou de concasser, ou de pétrir, ou de mixer à chaud, ou de mixer à froid, ou de battre, ou d'émulsionner les ingrédients, avant, pendant, ou après leur cuisson.

Dans un mode de réalisation de l'appareil de cuisson, et dans le premier mode de fonctionnement sous pression la pale de brassage peut être retirée ou absente de la cuve de cuisson. Étant donné que la pale de brassage des aliments est amovible, le premier mode de fonctionnement permet une cuisson sous pression et sans brassage. Ceci permet de garder les aliments intacts sans qu'il soient abîmés par la pale, tout en assurant une diminution du temps de cuisson.

Dans un mode de réalisation de l'appareil de cuisson, le couvercle intérieur peut être maintenu sur la cuve de cuisson grâce à un système de verrouillage, venant serrer le rebord supérieur de la cuve de cuisson et un rebord de la face supérieure du couvercle intérieur. Le couvercle intérieur est placé par l'utilisateur sur la cuve, et l'étanchéité est assurée entre le rebord supérieur de la cuve et le rebord de la face inférieure du couvercle intérieur. En d'autres termes, l'appareil de cuisson comprend un système de verrouillage qui vient bloquer le couvercle intérieur sur la cuve en venant enserrer à la fois le rebord supérieur de la cuve de cuisson et le rebord de la face supérieure du couvercle intérieur. On peut envisager une bride à visser, ou à clipser ou encore à pincer sur la cuve par exemple. Plusieurs brides sont aussi possibles.

Dans un mode de réalisation de l'appareil de cuisson, l'au moins un élément de régulation de pression peut être de type valve de régulation de pression et/ou un élément de sécurité, de type clapet de surpression. On peut prévoir par exemple une ou plusieurs vanne(s) ou valve(s) avec un siège et un clapet avec un ressort taré à une pression prédéterminée. Une petite quantité de vapeur va pouvoir s'échapper de manière régulière, et/ou la pression légèrement en excès va pouvoir diminuer de façon à rester constante, grâce aux éléments de régulation. En cas de surchauffe et donc de surpression, la vapeur va pouvoir rapidement s'échapper et/ou la pression en excès va pouvoir rapidement diminuer, grâce aux éléments de sécurité pression.

Dans un mode de réalisation de l'appareil de cuisson, le dispositif d'entrainement peut comprendre un moteur d'entrainement muni d'un arbre d'entrainement, la pale de brassage venant s'engager sur l'arbre d'entrainement. L'utilisateur va pouvoir rapidement et facilement engager la pale de brassage sur l'arbre d'entraînement, pour permettre un mode de brassage des aliments. A l'inverse, l'utilisateur va pouvoir rapidement et facilement désengager la pale de brassage de l'arbre d'entraînement, pour revenir ensuite à un mode de cuisson statique sans brassage.

Dans un mode de réalisation de l'appareil de cuisson, la cuve de cuisson peut comprendre un orifice ménagé pour le passage de l'arbre d'entrainement du dispositif d'entrainement de la pale de brassage, et apte à être bouché par un obturateur étanche lorsque la pale de brassage est enlevée. L'utilisateur va ainsi pouvoir rapidement et facilement engager l'arbre d'entrainement et le faire passer à travers l'orifice de la cuve, pour passer au mode brassage des aliments. A l'inverse, l'utilisateur va pouvoir rapidement et facilement faire sortir l'arbre d'entrainement de la cuve, pour revenir au mode au mode cuisson statique sans brassage. Grâce à l'obturateur, la cuve va pouvoir être bouchée de manière étanche. Autrement dit, l'appareil de cuisson comprend un obturateur amovible qui peut boucher le trou de passage. On peut prévoir un joint ou une bague d'étanchéité sur l'obturateur et/ou sur la cuve.

Dans un mode de réalisation de l'appareil de cuisson, les moyens de cuisson par convection peuvent comprendre un élément résistif chauffant et un ventilateur générant le flux d'air chaud. La chaleur et l'air chaud pulsé vont pouvoir être dispersés de manière optimale sur tous les aliments présents dans la cuve.

Dans un mode de réalisation de l'appareil de cuisson, le couvercle extérieur peut comprendre un système de clapet ou d'évent de sortie de vapeur et d'air chaud. Le clapet permet d'éviter de trop fortes accumulations de chaleur à la surface des aliments en assurant ainsi une régulation de température.

Dans un mode de réalisation, l'appareil de cuisson peut comprendre un plateau intérieur amovible positionné au fond de la cuve de cuisson. Ce plateau est un accessoire sur lequel les aliments sont posés pendant la cuisson. Pour la cuisson à la vapeur, l'utilisateur verse de l'eau sous le plateau. Les aliments n'entrent de ce fait pas en contact avec l'eau ou ne sont pas imprégnés d'eau. En étant placés sur le plateau pendant la cuisson, les aliments vont garder tous leurs nutriments.

Dans un mode de réalisation de l'appareil de cuisson, la pale de brassage peut être agencée pour brasser des aliments disposés sur le plateau intérieur amovible. La pale de brassage est surélevée pour tenir compte de la hauteur du plateau. La cuisson à la vapeur peut être effectuée tout en assurant un brassage des aliments, l'eau étant placée sous les aliments.

Dans un mode de réalisation, l'appareil de cuisson peut comprendre un tube de pale disposé sur l'orifice de la cuve de cuisson et sur lequel prend appui la pale de brassage, ledit tube de pale étant en outre agencé pour rendre le fond de la cuve de cuisson étanche. L'étanchéité est assurée par le contact entre le rebord de l'orifice de la cuve et le rebord à la base du tube de pale qui remonte depuis le fond de la cuve. On peut prévoir un joint ou une bague d'étanchéité sur le tube de pale et/ou sur la cuve.

Dans un mode de réalisation, l'appareil de cuisson peut comprendre des moyens de pesage agencés sous la cuve de cuisson ou sous le boîtier. Ces moyens de pesage permettent à l'utilisateur de peser et de doser précisément le ou les ingrédients successifs qu'il va utiliser et les faire ensuite cuire grâce à l'appareil de cuisson.

### BRÈVE DESCRIPTION DES FIGURES

L'invention sera mieux comprise à la lumière des figures annexées, données à titre d'illustrations et d'exemples non-limitatifs, dans lesquelles :

[Fig. 1] est une représentation en coupe d'un appareil de cuisson selon la présente invention ;

[Fig. 2] est une représentation de l'appareil de cuisson de la figure 1, avec un couvercle extérieur ouvert ;

[Fig. 3] est une représentation de l'appareil de cuisson de la figure 1, mis en configuration pour proposer un premier mode de fonctionnement, sous pression ;

[Fig. 4] est une représentation de l'appareil de cuisson de la figure 1, mis dans une autre configuration pour proposer le premier mode de fonctionnement sous pression ;

[Fig. 5] est une représentation de l'appareil de cuisson de la figure 1, mis en configuration pour proposer un deuxième mode de fonctionnement, à pression atmosphérique.

### DESCRIPTION DÉTAILLÉE

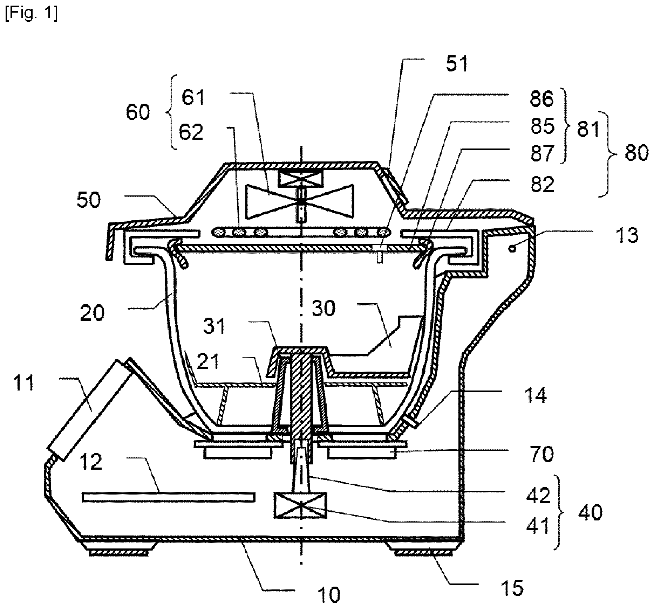

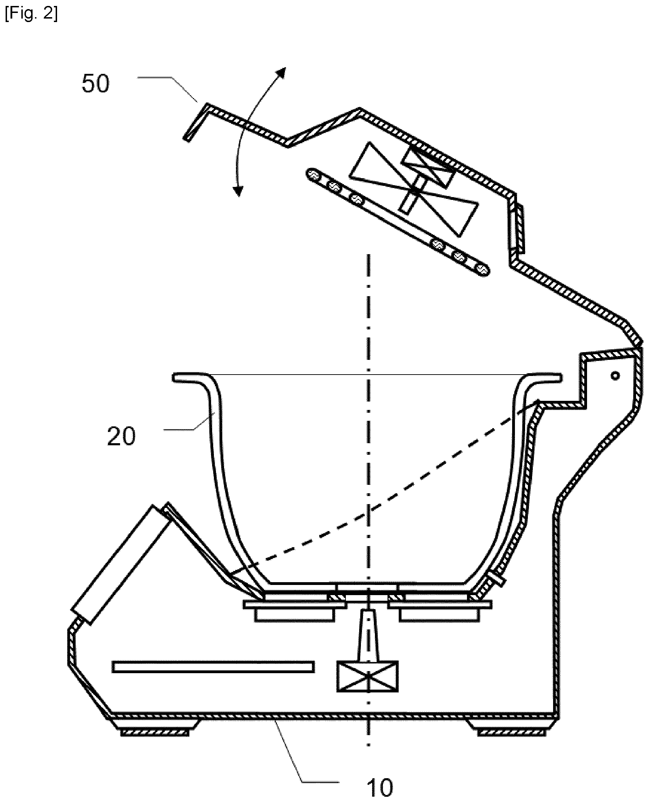

La figure 1 représente un appareil de cuisson électrique qui comprend :
- un boîtier 10,
- une cuve de cuisson 20, montée dans le boîtier et configurée pour recevoir des aliments à cuire,
- une pale de brassage amovible 30, configurée pour brasser des aliments à cuire reçus dans la cuve de cuisson 20,
- un dispositif d'entrainement en rotation 40, apte à entrainer en rotation la pale de brassage 30,
- un couvercle extérieur 50, disposé sur le boitier 10 et mobile entre une position ouverte (visible figure 2) pour donner accès à la cuve de cuisson 20 et une position fermée (visible figures 1, 3, 4 et 5) pour empêcher l'accès à la cuve de cuisson 20 et définir ainsi un espace de cuisson,
- des premiers moyens de cuisson par convection 60, positionnés en partie inférieure du couvercle extérieur 50, au-dessus de la cuve de cuisson 20, et agencés pour générer un flux d'air chaud sur les aliments à cuire reçus dans la cuve de cuisson 20,
- des deuxièmes moyens de cuisson 70, positionnés en partie inférieure du boîtier, sous la cuve de cuisson,
- un dispositif de régulation de pression 80 comprenant un couvercle intérieur 81 amovible, apte à rendre étanche un espace interne de la cuve de cuisson 20, et au moins un élément de régulation de pression 86 disposé sur le couvercle intérieur 81 et agencé pour réguler une pression au sein de l'espace interne de la cuve de cuisson 20
- des moyens de pesage 15 intégrés par exemple dans les pieds du boîtier 10, pour doser précisément les ingrédients d'une recette.

Dans le détail, le boîtier 10 comprend typiquement les éléments d'alimentation, de commande et de contrôle pour proposer à un utilisateur des fonctions de cuisson. En particulier, un écran 11 est prévu en façade du boîtier 10 pour permettre à l'utilisateur de mettre en service l'appareil de cuisson, de sélectionner des gestes culinaires (une température de cuisson, une puissance de chauffage, ou une opération de préparation...), ou une recette complète (une série de gestes culinaires étalés dans le temps).

Il est prévu une carte électronique 12 qui peut piloter et/ou alimenter les différents organes de l'appareil de cuisson (en particulier les premiers moyens de cuisson par convection 60 et/ou les deuxièmes moyens de cuisson de manière indépendante), et qui peut aussi comprendre une unité de mémoire pour stocker par exemple les recettes de cuisine. En particulier, un capteur de température 14 (une thermistance par exemple) est également prévu dans le boîtier 10 et connecté à la carte électronique 12, pour indiquer la température de la cuve de cuisson 20. Des moyens de pesage 15 sont également prévus dans les pieds de l'appareil de cuisson (des éléments piézo-électriques ou des jauges de contraintes) et connectés à la carte électronique 12.

Le positif d'entrainement en rotation 40 est logé dans le boîtier 10 et comprend notamment un moteur 41 (ou un motoréducteur) et un arbre d'entraînement 42, qui peut présenter typiquement une noix d'entraînement.

Le couvercle extérieur 50 est articulé par rapport au boîtier 10 autour d'un arbre ou axe de rotation 13 et embarque les premiers moyens de cuisson par convection 60, formés notamment par un élément résistif chauffant 62 et un ventilateur 61 (ou un moto-ventilateur). Comme le montre la figure 1, les premiers moyens de cuisson par convection 60 sont positionnés en partie inférieure du couvercle extérieur 50, au-dessus de la cuve de cuisson 20, pour générer un flux d'air chaud sur les aliments à cuire reçus dans la cuve de cuisson 20. On pourrait toutefois prévoir de loger les premiers moyens de cuisson par convection 60 dans le boîtier 10, et prévoir un conduit d'air pour diriger le flux d'air chaud sur les aliments à cuire reçus dans la cuve de cuisson 20.

Par ailleurs, un évent 51 est prévu dans le couvercle extérieur 50, qui peut être un clapet ou une grille, ou un volet articulé. De préférence, l'évent 51 est prévu vers l'arrière de l'appareil de cuisson (à l'opposé de l'écran 11) pour laisser échapper de la vapeur d'eau et/ou de l'air chaud.

Le boîtier 10 comprend en partie inférieure des deuxièmes moyens de cuisson 70, positionnés sous la cuve de cuisson 20, pour chauffer cette dernière et donc les aliments à cuire reçus dans la cuve de cuisson 20. On peut prévoir par exemple que les deuxièmes moyens de cuisson 70 soient des moyens de chauffage par induction, ou des éléments de chauffage résistifs.

La cuve de cuisson 20 peut recevoir un plateau intérieur 21, amovible pour pouvoir être installé ou retiré par l'utilisateur de la cuve de cuisson 20. Des aliments peuvent être disposés sur la plateau intérieur 21, et un trou central est prévu dans le plateau intérieur 21 et dans la cuve 20, pour laisser passer un tube de pale 31 et la pale de brassage 30 qui peut s'accoupler avec l'arbre d'entraînement 42.

Le tube de pale 31 est prévu pour se monter de manière amovible sur la cuve de cuisson 20 et/ou le boîtier 10, par exemple par accouplement quart de tour, ou vissage dans l'un de la cuve de cuisson 20 ou du boîtier 10, ou par un contre écrou. Afin de garantir une absence de fuites ou de coulures, il est prévu des moyens d'étanchéité entre la cuve de cuisson 20 et le tube de pale 31 et/ou la pale de brassage 30. On peut envisager par exemple un joint, un joint torique, un joint à lèvres, ou une membrane...

Enfin, l'appareil de cuisson est prévu avec un dispositif de régulation de pression 80 comprenant notamment le couvercle intérieur 81 et au moins un élément de régulation de pression 86, pour rendre étanche un espace interne de la cuve de cuisson 20. Dans cet exemple, l'élément de régulation de pression 86 est embarqué sur le couvercle intérieur 81, mais il pourrait en être détaché. Le couvercle intérieur 81 est formé par un corps de couvercle 85 et un joint périphérique 87 qui peut être un joint en U détachable du corps de couvercle 85, ou un joint surmoulé sur le corps de couvercle 85. Le couvercle intérieur 81 peut être accouplé ou fixé à la cuve de cuisson 20 par un système de verrouillage 82 (une ou plusieurs pince(s) élastique(s), ou un serre joint, ou une bride à vis, ou une bride à clipser...). Ainsi, il est possible de rendre étanche l'espace interne de la cuve de cuisson 20 après installation rapide du couvercle intérieur 81 sur la cuve de cuisson 20.

Comme le montre la figure 2, le couvercle extérieur 50 est articulé par rapport au boîtier 10 autour de l'axe de rotation 13, pour permettre à l'utilisateur d'installer sur l'appareil de cuisson la cuve de cuisson 20 et tous les accessoires requis, ainsi que pour mettre des aliments à cuire dans la cuve de cuisson 20. On peut prévoir bien entendu des capteurs de détection de présence des différents organes et accessoires, en particulier, des capteurs de présence de la cuve de cuisson 20, du couvercle intérieur 81, de la pale de brassage 30 peuvent être prévus.

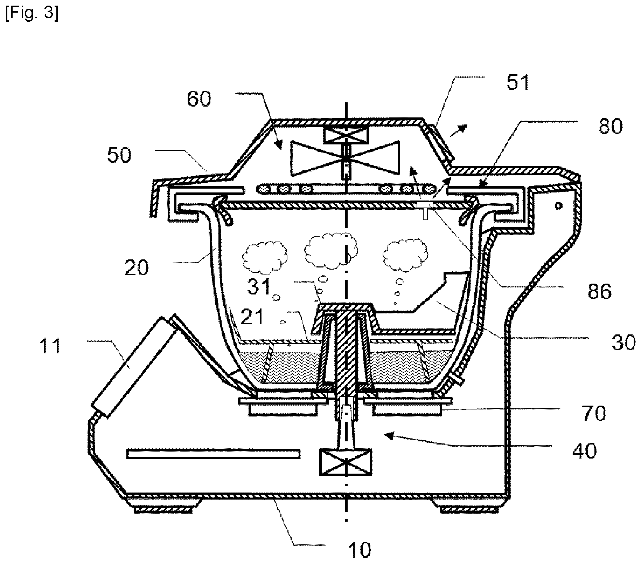

La figure 3 est une représentation de l'appareil de cuisson de la figure 1, mis en configuration pour proposer un premier mode de fonctionnement, sous pression. Selon la configuration représentée, l'utilisateur a installé dans l'appareil de cuisson :
- la cuve de cuisson 20,
- le plateau intérieur 21,
- la pale de brassage 30 et son tube de pale 31,
- le dispositif de régulation de pression 80, fixé de manière étanche sur la cuve de cuisson 20,
- de l'eau, à un niveau inférieur du plateau intérieur 21.

Une fois le couvercle extérieur 50 fermé, un premier mode de fonctionnement sous pression peut être lancé. A cet effet, après sélection par l'utilisateur sur l'écran 11 du premier mode de fonctionnement, l'appareil de cuisson (la carte électronique 12) peut lancer le premier mode de fonctionnement sous pression, dans lequel seuls les deuxièmes moyens de cuisson 70 sont opérants. En d'autres termes, seuls les deuxièmes moyens de cuisson 70 sont alimentés pour chauffer les aliments à cuire, les premiers moyens de cuisson par convection 60 sont rendus inopérants et ne sont pas alimentés. Par ailleurs, la pale de brassage 30 peut également être mise en rotation par commande du dispositif d'entraînement 40, de manière continue ou non.

En conséquence, seule la chaleur fournie par les deuxièmes moyens de cuisson 70 permet de chauffer la cuve de cuisson 20, l'eau qu'elle contient, et les aliments à cuire. Comme le montre la figure 3, de la vapeur d'eau est générée, et la pression augmente dans l'espace fermé par le couvercle intérieur 81. Cependant, l'élément de régulation de pression 86 (une vanne de régulation de pression, par exemple un clapet à ressort taré) permet une libération de gaz au-dessus d'une pression interne seuil, et de l'air chaud et/ou de la vapeur d'eau peuvent s'échapper sous le couvercle extérieur 50 et via l'évent 51. En fin de fonctionnement, on peut prévoir que l'élément de régulation de pression 86 libère toute la pression avant toute ouverture du couvercle extérieur 50 (dont l'ouverture peut être verrouillée automatiquement). Pour des raisons de sécurité, on peut aussi prévoir que l'élément de régulation de pression 86 libère systématiquement toute la pression au-delà d'une pression de sécurité, supérieure à la pression interne seuil mais inférieure à toute pression d'éclatement (on peut prévoir par exemple un fusible mécanique de décharge).

Ainsi, dans le premier mode de fonctionnement sous pression de la figure 3, la mise en configuration de l'appareil de cuisson permet de proposer une cuisson vapeur sous pression, avec brassage des aliments.

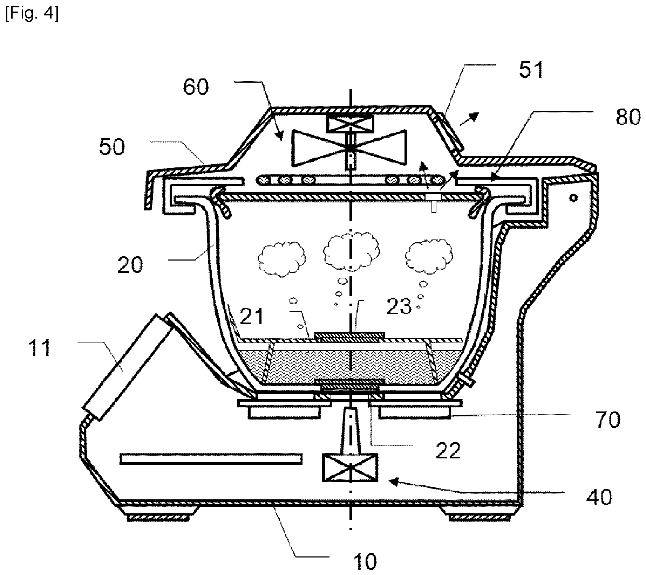

La figure 4 est une représentation de l'appareil de cuisson de la figure 1, mis dans une autre configuration pour proposer le premier mode de fonctionnement sous pression. Très simplement, dans cette autre mise en configuration, la pale de brassage 30 et son tube de pale ne sont pas installés dans la cuve de cuisson 20. Un obturateur étanche 22 est installé dans le trou de passage de la cuve de cuisson 20, et un simple bouchon 23 est installé dans le trou de passage du plateau intérieur 21.

L'obturateur étanche 22 peut se monter sur la cuve de cuisson 20 de la même manière que le tube de pale 31 : par accouplement quart de tour, ou vissage ou par un contre écrou. Afin de garantir une absence de fuites ou de coulures, il est prévu de même des moyens d'étanchéité entre la cuve de cuisson 20 et l'obturateur étanche 22 : un joint, un joint torique, un joint à lèvres, ou une membrane...

Ainsi, dans cette autre mise en configuration l'appareil de cuisson peut proposer le premier mode de fonctionnement sous pression sans brassage, dans lequel seuls les deuxièmes moyens de cuisson 70 sont opérants. Comme le montre la figure 4, de la vapeur d'eau est générée, et la pression augmente dans l'espace fermé par le couvercle intérieur 81, pour cuire des aliments disposés sur la plateau intérieur 21. De la même manière, l'élément de régulation de pression 86 permet de réguler la pression dans la cuve de cuisson 20 autour de la pression interne seuil.

On peut aussi envisager d'utiliser l'appareil de cuisson selon le premier mode de fonctionnement sous pression sans brassage et sans le plateau intérieur 21, pour immerger (complètement ou partiellement) les aliments à cuire dans la cuve de cuisson 20.

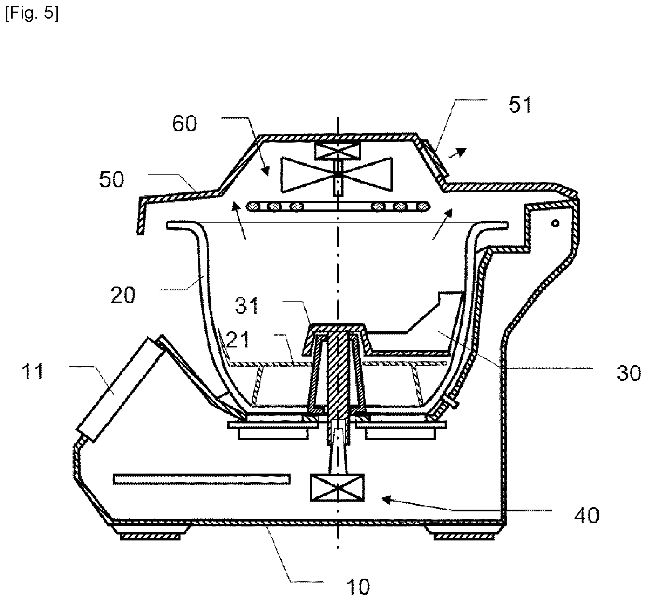

La figure 5 est une représentation de l'appareil de cuisson de la figure 1, mis en configuration pour proposer un deuxième mode de fonctionnement, à pression atmosphérique. En comparaison avec les figures 3 ou 4, on peut noter que dans cette configuration, le dispositif de régulation de pression 80 n'est pas installé au-dessus de la cuve de cuisson 20. En conséquence, rien de permet de faire augmenter la pression, et la cuisson des aliments se fait à la pression atmosphérique. Sur cette vue schématique, un jeu important est visible entre le couvercle extérieur 50 et la cuve de cuisson 20, mais ce jeu peut être minimal voir nul en jouant sur la course du couvercle extérieur 50, ou en ajustant les dimensions (on peut prévoir par exemple un épaulement dans le couvercle extérieur 50 correspondant au rebord de la cuve de cuisson 20).

De plus, en raison de l'absence du dispositif de régulation de pression 80 et en particulier du couvercle intérieur 81, rien ne fait écran entre les premiers moyens de cuisson par convection 60 et les aliments à cuire reçus dans la cuve de cuisson 20. En conséquence, dans le deuxième mode de fonctionnement, à pression atmosphérique, les premiers moyens de cuisson par convection 60 et les deuxièmes moyens de cuisson 70 peuvent être utilisés. Autrement dit, les premiers moyens de cuisson par convection 60 et/ou les deuxièmes moyens de cuisson 70 sont rendus opérants dans le deuxième mode de fonctionnement, à pression atmosphérique.

Toutes les options de pilotage des premiers moyens de cuisson par convection 60 et/ou des deuxièmes moyens de cuisson 70 sont possibles :
- uniquement les premiers moyens de cuisson par convection 60 en continu ou alternance,
- uniquement les deuxièmes moyens de cuisson 70 en continu ou alternance,
- les premiers moyens de cuisson par convection 60 et les deuxièmes moyens de cuisson 70 séquentiellement, simultanément, en continu ou en alternance...

Pour prendre un premier exemple, on peut prévoir une cuisson de frites avec uniquement une alimentation des premiers moyens de cuisson par convection 60 en continu ou en alternance, la pale de brassage 30 pouvant être également pilotée en continu ou en alternance.

Selon un deuxième exemple en mettant un peu d'eau en fond de cuve de cuisson, on peut prévoir de décongeler ou cuire des aliments à la vapeur avec uniquement une alimentation des deuxièmes moyens de cuisson 70 en continu ou en alternance, la pale de brassage 30 pouvant être également pilotée en continu ou en alternance.

Selon un troisième exemple en mettant un peu d'eau en fond de cuve de cuisson, on peut prévoir de décongeler des aliments à la vapeur avec uniquement une alimentation des deuxièmes moyens de cuisson 70 en continu ou en alternance, la pale de brassage 30 pouvant être également pilotée en continu ou en alternance dans une première phase. Dans une deuxième phase, on peut cuire les aliments avec une alimentation des premiers moyens de cuisson par convection 60 et des deuxièmes moyens de cuisson 70 en continu ou en alternance, la pale de brassage 30 pouvant être également pilotée en continu ou en alternance.

Selon encore une autre configuration, on peut proposer le deuxième mode de fonctionnement, à pression atmosphérique, sans la pale de brassage 30 ni le tube de pale 31, en bouchant la cuve de cuisson 20 avec l'obturateur étanche 22 de la figure 4. On peut alors cuire des aliments comme dans une casserole en activant les deuxièmes moyens de cuisson 70, ou comme dans un four en activant les premiers moyens de cuisson par convection 60.

En résumé, le dispositif de régulation de pression 80, le plateau intérieur 21 et la pale de brassage 30 sont amovibles, et il est possible de piloter indépendamment et sous certaines conditions les deuxièmes moyens de cuisson 70 des premiers moyens de cuisson par convection 60.

On peut alors proposer :
- un premier mode de fonctionnement sous pression avec le dispositif de régulation de pression 80 installé, avec ou sans la pale de brassage 30 et avec ou sans le plateau intérieur 21, seuls les deuxièmes moyens de cuisson 70 pouvant fournir la chaleur de cuisson ;
- un deuxième mode de fonctionnement à pression atmosphérique sans le dispositif de régulation de pression 80, avec ou sans la pale de brassage 30 et avec ou sans le plateau intérieur 21, les premiers moyens de cuisson par convection 60 et/ou les deuxièmes moyens de cuisson 70 pouvant fournir la chaleur de cuisson.

L'appareil de cuisson décrit reste simple, et permet toutefois de proposer une vaste gamme de modes de cuisson et de configurations pour cuire des aliments.

Diverses modifications et/ou améliorations peuvent être apportées par l'homme du métier aux différents modes de réalisation de l'invention décrits dans la présente description sans sortir du cadre de l'invention.

## Revendications

1. Appareil de cuisson électrique, comprenant :
- un boîtier (10),
- une cuve de cuisson (20), montée dans le boîtier (10) et configurée pour recevoir des aliments à cuire,
- une pale de brassage (30) amovible, et configurée pour brasser des aliments à cuire reçus dans la cuve de cuisson (20),
- un dispositif d'entrainement (40) en rotation, apte à entrainer en rotation la pale de brassage (30),
- un couvercle extérieur (50), disposé sur le boîtier (10) et mobile entre une position ouverte pour donner accès à la cuve de cuisson (20) et une position fermée pour empêcher l'accès à la cuve de cuisson (20) et définir ainsi un espace de cuisson,
- des premiers moyens de cuisson par convection (60), agencés pour générer un flux d'air chaud sur les aliments à cuire reçus dans la cuve de cuisson (20),
- des deuxièmes moyens de cuisson (70), positionnés en partie inférieure du boîtier (10),
**caractérisé en ce que** l'appareil de cuisson comprend un dispositif de régulation de pression (80) comprenant un couvercle intérieur (81) amovible, apte à rendre étanche un espace interne de la cuve de cuisson (20), et au moins un élément de régulation de pression (86) disposé sur le couvercle intérieur (81) et agencé pour réguler une pression au sein de l'espace interne de la cuve de cuisson (20),
de façon à proposer :
• un premier mode de fonctionnement sous pression, dans lequel
▪ le couvercle intérieur (81) est monté au niveau d'un rebord supérieur de la cuve de cuisson (20) sous le couvercle extérieur (50) et sous les premiers moyens de cuisson par convection (60),
▪ le couvercle extérieur (50) est en position fermée,
▪ les premiers moyens de cuisson par convection (60) sont rendus inopérants, et
▪ les deuxièmes moyens de cuisson (70) sont rendus opérants,
• ou un deuxième mode de fonctionnement à pression atmosphérique, dans lequel
▪ le couvercle intérieur (81) est retiré de la cuve de cuisson (20),
▪ le couvercle extérieur (50) est en position fermée, et
▪ les premiers moyens de cuisson par convection (60) et/ou les deuxièmes moyens de cuisson (70) sont rendus opérants.

2. Appareil de cuisson selon la revendication 1, comprenant une pale de brassage (30) amovible, et configurée pour brasser des aliments à cuire reçus dans la cuve de cuisson (20), et un dispositif d'entrainement (40) en rotation, apte à entrainer en rotation la pale de brassage (30).

3. Appareil de cuisson selon l'une des revendications 1 ou 2, **caractérisé en ce que** dans le premier mode de fonctionnement sous pression, la pale de brassage (30) est retirée de la cuve de cuisson (20).

4. Appareil de cuisson selon l'une des revendications 1 à 3, **caractérisé en ce que** le couvercle intérieur (81) est maintenu sur la cuve de cuisson (20) grâce à un système de verrouillage (82), venant serrer le rebord supérieur de la cuve de cuisson (20) et un rebord de la face supérieure du couvercle intérieur (81).

5. Appareil de cuisson selon l'une des revendications 1 à 4, **caractérisé en ce que** l'au moins un élément de régulation de pression (86) est de type valve de régulation de pression et/ou un élément de sécurité, de type clapet de surpression.

6. Appareil de cuisson selon l'une quelconque des revendications précédentes, **caractérisé en ce que** le dispositif d'entrainement (40) comprend un moteur d'entrainement (41) muni d'un arbre d'entrainement (42), la pale de brassage (30) venant s'engager sur l'arbre d'entrainement (42).

7. Appareil de cuisson selon la revendication 6, **caractérisé en ce que** la cuve de cuisson (20) comprend un orifice ménagé pour le passage de l'arbre d'entrainement (42) du dispositif d'entrainement (40) de la pale de brassage (30), et apte à être bouché par un obturateur étanche (22) lorsque la pale de brassage (30) est enlevée.

8. Appareil de cuisson selon l'une quelconque des revendications précédentes, **caractérisé en ce que** les premiers moyens de cuisson par convection (60) comprennent un élément résistif chauffant (62) et un ventilateur (61) générant le flux d'air chaud.

9. Appareil de cuisson selon l'une quelconque des revendications précédentes, **caractérisé en ce que** le couvercle extérieur (50) comprend un système de clapet de sortie de vapeur et d'air chaud.

10. Appareil de cuisson selon l'une quelconque des revendications précédentes, **caractérisé en ce qu'**il comprend un plateau intérieur (21) amovible positionné au fond de la cuve de cuisson (20).

11. Appareil de cuisson selon la revendication 10, **caractérisé en ce que** la pale de brassage (30) est agencée pour brasser des aliments disposés sur le plateau intérieur (21) amovible.

12. Appareil de cuisson selon la revendication 11 et la revendication 7, **caractérisé en ce qu'**il comprend un tube de pale (31) disposé sur l'orifice de la cuve de cuisson (20) et sur lequel prend appui la pale de brassage (30), ledit tube de pale (31) étant en outre agencé pour rendre le fond de la cuve de cuisson (20) étanche.

13. Appareil de cuisson selon l'une quelconque des revendications précédentes, **caractérisé en ce qu'**il comprend des moyens de pesage agencés sous la cuve de cuisson (20) ou sous le boîtier (10).
